# EUROPEAN PATENT APPLICATION

(11) **EP 1 582 316 A2**
(43) Date of publication of application: **05.10.2005**
(21) Application number: 05251497.3
(22) Date of filing: 11.03.2005
(51) Int. Cl.: B26B 19/04, B21D 53/64, B23P 15/40

(54) **Method for manufacturing an inner cutter for an electric shaver**

(30) Priority: 15.03.2004 JP 2004072614
(71) Applicant: IZUMI PRODUCTS COMPANY, Nagano (JP)
(72) Inventor: Okabe, Masaki, Izumi Products Company, Nagano (JP)
(74) Representative: Jenkins, Peter David

(57) **Abstract**

A method for manufacturing an inner cutter for a reciprocating electric shaver, including the steps of: forming a plurality of slits in a thin plate; forming ribs by pressing bridging-portions that remain between the slits so that each rib extends for the length of each bridging-portion and forms a protruding portion that protrudes in the width direction, thus obtaining an intermediate worked member; deep drawing the intermediate worked member that has the ribs into substantially an arch shape with the protruding portions of the ribs facing outward; and grinding the outer surface of the arch-form intermediate worked member, thus forming cutting edges which have blade surfaces and acute rake angles in the protruding portions.

## Description

The present invention relates to a method for manufacturing an inner cutter adapted to be used in a reciprocating electric shaver in which the cutter blades of the inner cutter make a reciprocating motion while making sliding contact with the inside surface of a substantially arch-form outer cutter.

In generally known reciprocating electric shavers, an inner cutter makes a reciprocating motion while making sliding contact with the inside surface of an arch-form outer cutter, and hair that enters openings (hair introduction openings) formed in the outer cutter is cut by the reciprocating inner cutter, as seen in, for instance, Japanese Patent Application Publication (Kokoku) No. S59-32151 and Japanese Patent Application Laid-Open (Kokai) Nos. S59-101182 and H10-323461. The inner cutters used in such electric shavers of this type include assembled type inner cutters and integral type inner cutters.

In the assembled type inner cutters, a plurality of cutter blades formed by stamping a thin plate(s) into an arch-form shape are held on an inner cutter holder with these cutter blades lined up at fixed intervals as disclosed in Japanese Patent Application Publication (Kokoku) Nos. S59-32151 and Japanese Patent Application Laid-Open (Kokai) No S59-101182. In such inner cutters, since it is necessary to make a plurality of cutter blades and attach these cutter blades to a cutter blade attachment member, the number of manufacturing processes is large, and the productivity tends to be poor.

On the other hand, in the integral type inner cutter, which is typically made of a single metal cylinder or sheet, all of the cutter blades are integrally formed. More specifically, perpendicular slits are formed in a cylindrical body made of a metal, ceramic or the like, and the portions that remain between the slits are used as cutter blades. In another type of integral type inner cutters, a thin plate is bent into an arch-form shape, and cutter blades are formed by making slits in the perpendicular direction with respect to the axis of the arch-form portion. In still another integral type inner cutters, a thin plate in which slits have been made is bent into an arch-form shape as shown in Japanese Patent Application Laid-Open (Kokai) No. H10-323461.

Meanwhile, it is generally known that the sharpness of inner cutters conspicuously improves by forming the rake angle formed on the cutting edges of the cutter blades in an acute angle. Here, the rake angle is the angle defined by the blade surface, where a cutter blade makes sliding contact with the outer cutter, and the side surface, which is connected with the cutting edge of the cutter blade.

In the assembled type inner cutters, the cutter blades are independent from each other, and an acute rake angle is formed by, for example, squeezing both surfaces of the cutter blades by pressing.

However, in the case of the integral type inner cutter, the respective cutter blades are integrally formed or they are formed on a single cylindrical body or on a single arch-form thin plate; accordingly, it is generally difficult to form the rake angle into an acute angle. Nevertheless, various methods for making the rake angle into an acute angle for integral type inner cutters have been introduced.

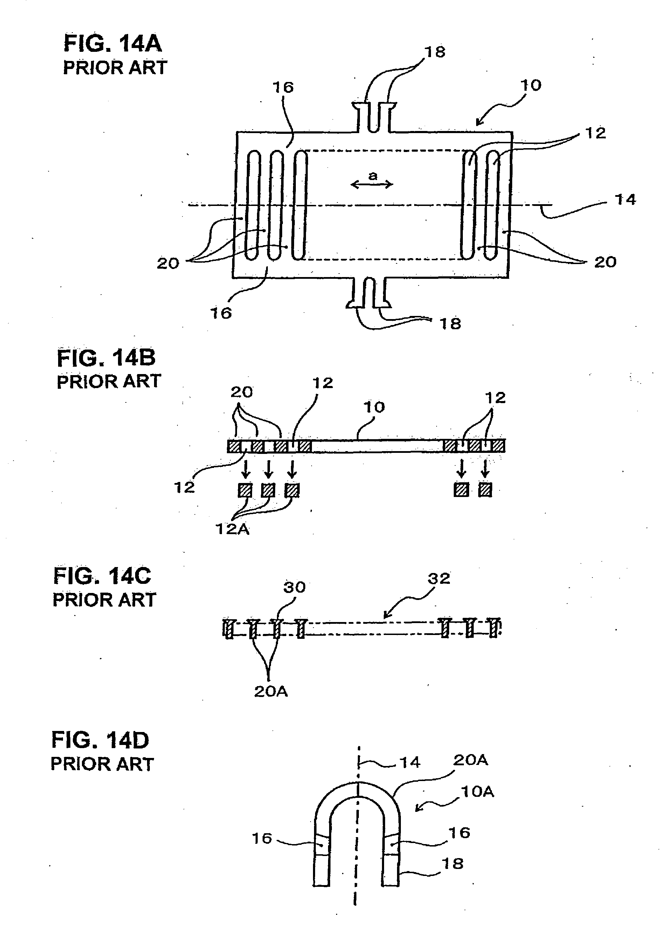

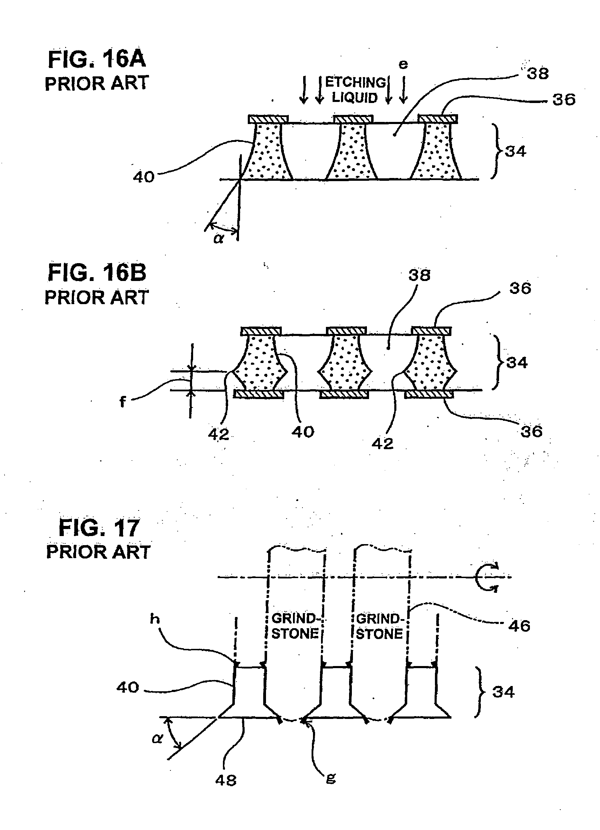

Figure 14 shows the manufacturing process of an integral type inner cutter by a press-molding method, and Figure 15 illustrates a detailed working process of the cutter blades of this inner cutter.

In Figure 14, the reference numeral 10 is a thin plate that will make the inner cutter. In this plate, a contour of an unfolded or extended inner cutter and a plurality of slits 12 that extend in the direction perpendicular to the reciprocating (or lateral) direction (shown by arrow a) of the inner cutter are press-stamped from a thin plate of, for instance, quenchable stainless steel. Figure 14A is a top view of the thin plate 10, and Figure 14B is a sectional view taken along the centerline 14 of the thin plate 10 of Figure 14A.

In Figure 14A, the reference numeral 16 is a pair of left and right side edge portions that are parallel to the direction of lateral length of the inner cutter (the reciprocating direction, i.e., the direction of the lateral center line 14), and 18 indicates bifurcated claws that protrude outward from the centers of the edge portion of side edge portions 16. The inner cutter (that can be referred to by the reference numeral 10) is held on an inner cutter holder (not shown) by these claws 18 and makes a reciprocating motion by this inner cutter holder.

In Figure 14B, 12A indicates discarded elements resulted from the stamping work of the slits 12. Bridging-portions 20 that remain after the stamping work and are in the form of being connected to the pair of the side edge portions 16 are formed (or remain) between these slits 12.

As shown in Figure 15, forming of the rake angle into an acute angle by press-molding is performed on the bridging-portions 20. In Figure 15, the reference numeral 22 indicates a flat lower mold (die side), and 24 indicates an upper mold (punch side).

The flat plate 10 shown in Figures 14A and 14B is placed on the lower mold 22. The upper mold 24 is formed with grooves 26 which have substantially the same length as the bridging-portions 20 and which have a width that is narrower than the width of the bridging-portions 20; and the grooves 26 are positioned so as to correspond to the respective bridging-portions 20. Beveled faces 28 that are substantially triangular in cross section are formed in the opening corner of the grooves 26.

When the bridging-portions 20 are pressed by the molds 22 and 24, the bridging-portions 20 undergo plastic deformation from the state shown in step (A) to the states shown in steps (B), (C) and (D). The following description on making the rake angles into an acute angle for the bridging-portions 20 will be made only for one bridging-portion 20 though such a process is made for all the bridging-portions simultaneously.

More specifically, first, when the upper mold 24 is lowered, the edges of the upper surface of the bridging-portion 20 advance into the groove 26 while being guided by the beveled surfaces 28 of the upper mold 24 in step (B), and the lower portion of the bridging-portion 20 is caused to protrude in the direction of width by the beveled surfaces 28 in step (C). Then, the lower portion of the protruding portion 30 advance into the space between the facing surfaces of the upper and lower molds 22 and 24; as a result, the cross section of the bridging-portion 20 assumes substantially the shape of an inverted umbrella or an inverted letter T.

The thin plate 10 thus makes an intermediate worked member 32 in which, as shown in Figure 14C, all the bridging-portions 20 are pressed into a cross-sectional shape that is substantially the shape of an inverted T or an inverted umbrella. The bridging-portions 20 of this intermediate worked member 32 make the ribs 20A that have protruding portions 30.

In step (D) of Figure 15, the intermediate worked member 32 is subjected to deep drawing so as to be into an arch-form shape about the lateral center line 14 (see Figure 14A) so that the protruding portions 30 of the ribs 20A face outward.

Then, cutter blades with an acute rake angle α are formed by grinding the outer circumferential surface to the dimension a.

However, in the above method, since the amount of plastic deformation working of the thin plate is large, braking and cracking tend to occur internally.

More specifically, noting the position b of the dot symbol near the upper corner part of the bridging-portion 20 shown in step (a) in Figure 15, this position b is, during the deformation work, caused to move, as shown in steps (B) and (C), toward the center in the direction of width of the bridging-portion 20 by the beveled face 28 of the upper mold 24, and it is further caused to move to the vicinity of the protruding portion 30 as shown in step (D). Here, the deformation limit of the metal tends to exceed as the angle c of the beveled face 28 increases, and as the dimension d increases, so that braking and cracking are more likely to occur internally. Such internal braking and cracking are pushed inward by the molds 22 and 24 in the final stage of pressing in step (D) and are therefore extremely difficult to find from the outside.

Figures 16A and 16B show the manufacturing process of an integral type inner cutter according to an etching method (see the above-identified Japanese Patent Application Publication (Kokoku) No. S59-22542). In Figure 16A, the etching is performed from one side; and in Figure 16B, the etching is performed from the both sides.

In Figure 16A, resists 36 are formed on one surface (the upper surface) of a thin plate 34 in positions that correspond to the bridging-portions 20 (see Figure 14A), and slits 38 are worked by performing etching with a jet of etching liquid applied from the upper surface as indicated by arrows e. Here, the resists 36 are formed by coating the entire surface with a resist or pasting a dry film of the resist to the entire surface and then exposing a pattern and removing the unnecessary resists (photo-etching method).

In this case, the deeper in the thin plate from the upper surface (resist surface), the lesser the amount removed by etching, and thus the width of the slits 38 becomes narrower. Accordingly, the acute rake angle α is formed on the side edges of the undersurfaces of the bridging-portions 40. The method in which etching is thus performed from one side or from one surface takes a longer time to form the slits 38, thus increasing the working time. In addition, there are restrictions on the adjustment range of the rake angle α.

Accordingly, performing the etching on a thin plate from both sides has been considered.

In Figure 16B, resists 36 are formed on both sides (surfaces) of the thin plate 34, and slits 38 are formed by applying a jet of etching liquid from both sides. In this case, protruding strips 42 are formed on the inside walls of the bridging-portions 40; accordingly, it is necessary to grind off the portions f that are from one side of the thin plate 34 to these protruding strips 42. However, since the thin plate involves a plurality of ground portions f, a large amount of thin plate material is wasted.

Figure 17 shows the method of grinding or cutting (see the above-identified Japanese Patent Application Laid-Open (Kokai) No. S53-116961).

In this method, slits 38 are ground using grindstones 46 that are fastened to a rotating shaft that is rotated as shown by circular arrow and are parallel (horizontal) to the thin plate 34. Here, the outer circumferential edges of the grindstones 46 are beveled to a substantially trapezoidal shape in cross section so that each grindstone is shaped to be thinner outward. As a result, a rake angle of α, is formed in positions that correspond to the outer circumferential sides of the grindstone 46 on the bridging-portions 40 that remain between the slits 38.

In this method, however, flashes g and h are generated on the cutting edges and the edges on the opposite sides of the bridging-portions 40. As illustrated in Figure 14 (C), the thin plate 34 is deep drawn into an arch-form shape with the blade surfaces 48 on the outside. If flashes g and h remain thereon, the adhesion with the tool (molds) is poor, and the working precision drops; furthermore, scratches caused by the flashes g and h would be formed in the blade surfaces 48 and in the vicinity of the cutting edges, thus lowering the quality of the inner cutter. Accordingly, it is necessary to remove the flashes g and h first and then perform deep drawing.

Figure 18A and 18B show the method that uses electro-casting (see the above-identified Japanese Patent Application Publication (Kokoku) No. S60-9597.

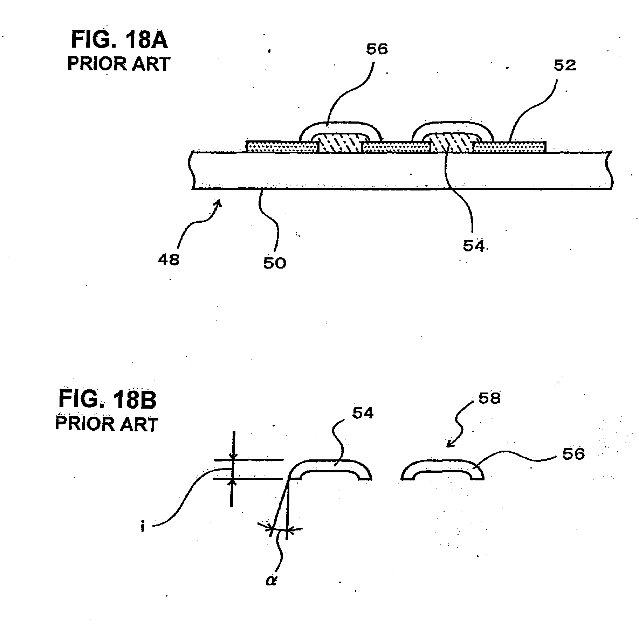

In Figure 18A shows the electro-casting, and Figure 18B shows the finished inner cutter. The reference numeral 48 is a matrix mold. In this matrix mold 48, resists 52 and primary plating layers 54 are formed in parallel on top of a base member 50 that is made of a synthetic resin or copper. An electro-deposition metals 56 are electro-deposited on top of this primary plating layer 54, and the matrix mold 48 (including the base member 50 and the resists 52) is then remove, thus producing the cutter blades of the inner cutter shown in Figure 18B. Figure 18B shows the cross section of the cutter blades 58.

In the cutter blades 58 of Figure 18B, when it is attempted to increase the thickness **i**, the plating time increases, and the mass production characteristics deteriorate. Furthermore, it also becomes difficult to reduce the rake angle α. Moreover, there are restrictions on the materials that can be used for the thin plate. Ordinarily, the material used is Ni, Ni-cobalt or the like, so that the degree of freedom in selecting materials is restricted.

In the above-described press-molding method (Figures 14A through 14D and 15), braking and cracking occurring inside the bridging-portions 20 are easily overlooked; accordingly, problems occur in the durability of the cutting edges of the inner cutter, and there is a danger that this will lead to a quality drop. Furthermore, since the amount of pressing involved is large, it is necessary to use expensive molds that have a high precision and high strength. Moreover, since the pressing pressure is high, it is necessary to use a large size pressing machine, and the thin plate needs to be of an expensive material that has good pressing characteristics. Furthermore, different molds must be used for different shape deformations of inner cutters, and it is difficult to manufacture inner cutters that have a complicated shape.

As seen from the above, in the method that uses etching (Figures 16A through 16D), the manufacturing time is long, and there is considerable waste of material. Furthermore, the problem of restrictions on the adjustment range of the rake angle also arises.

In the case of a method that uses grinding (cutting) (Figure 17), it is necessary to remove the flash that is generated. Thus, the procedure required is bothersome, and the productivity is poor, and further, it is very difficult for this method to handle inner cutters that have a complex shape.

In the method that uses electro-casting (Figure 18), there are problems. The mass production characteristics are poor, the adjustment range of the rake angle is small, and there are restrictions on the degree of freedom of material selection for the thin plate.

The present invention is to overcome the above-described problems, and it solves at one time the various problems encountered in the conventional methods.

More specifically, the aim of the present invention is to provide a method for manufacturing an integral type inner cutter which has a broad rake angle adjustment range, makes it possible to reduce the rake angle, allows easy handling of inner cutters that have a complicated shape, and makes it possible to produce an inner cutter with high durability.

The above aim is accomplished by unique steps of the present invention for a method for manufacturing an inner cutter for a reciprocating electric shaver in which an integral inner cutter makes a reciprocating motion while causing a plurality of cutter blades thereof to make sliding contact with the inside surface of an arch-form outer cutter; and in the present invention, the method includes the steps of:
(a) forming a plurality of slits in a thin plate so that the slits are substantially perpendicular to the reciprocating direction of the inner cutter and are defined by uneven surfaces with respect to the depth of the slits (or to the thickness of the thin plate),
(b) forming ribs by pressing bridging-portions that remain between the slits so that the ribs extend in the direction of length of the bridging-portions and are in a form of protruding portions that protrude in the direction of width and toward a blade surface, thus obtaining an intermediate worked member,
(c) deep drawing the intermediate worked member that has ribs formed in step (b) into substantially an arch shape with the protruding portions of the ribs facing outward, and
(d) grinding the outer circumferential surface of the arch-form intermediate worked member, thus forming cutting edges that have blade surfaces and acute rake angles in the protruding portions.

In the present invention, the slits that are formed in step (a) are defined by the worked wall surfaces that are uneven or inclined with respect to the direction of depth of the slits (or in the direction of the thickness of the thin plate); accordingly, the amount of plastic deformation working that is performed during the pressing work in step (b) is reduced. Consequently, the amount of deformation occurred during the pressing work of the thin plate is small, and braking and cracking tend not to occur internally. The inner cutter obtained by the present invention thus has an improved durability in the cutting edges. Furthermore, since the amount of deformation of the thin plate is small, the selection range of the materials for the thin plate is high, and the method can use the mold that has a reduced strength and pressing pressure; as a result, the pressing machine can be simple in structure and small in size.

Meanwhile, since the protruding portions are formed on the blade surface sides of the ribs in step (b), the rake angle of the cutting edges can be formed as an acute angle by grinding the outer surfaces of the protruding portions in step (d); and the rake angle can be adjusted for a broad range by adjusting the shape of these protruding portions and the amount of outer surface grinding. In particular, when deep drawing the intermediate worked member into an arch-form shape is performed in step (c), both side edges of the protruding portions on the outer circumferential sides of the ribs are drawn toward the inner circumferential side; accordingly, the outer circumferential surfaces of the protruding portions are slightly bent in cross section perpendicular to the direction of length of the ribs. However, since these protruding portions protrude further toward the blade surface side than the surfaces formed as blade surfaces by the grinding in step (d), the blade surfaces can be ground to make surfaces that are parallel to the reciprocating direction of the inner cutter. Furthermore, since the amount of working by pressing in step (b) is small, inner cutters that have complicated shapes can easily be handled.

The thin plate can be formed so as to have a contour of an intended inner cutter in step (a). For example, in cases where etching is used in step (a), the contour is made by etching. The contour or external shape can also be made by stamping when pressing is performed in step (b). In this case, step (a) is performed on a large thin plate for a plurality of inner cutters, and the resulted plurality of intermediate worked members are simultaneously formed in step (b); accordingly, the productivity is high.

It is advisable to use photo-etching in step (a). With photo-etching, high-precision working is easily performed. Furthermore, by way of executing etching from both sides (or both surfaces) of the thin plate, the time of the etching treatment can be shortened. However, etching can be performed from only one surface (the opposite surface from the blade surface). In this case, though it takes longer processing time, the amount of deformation caused by the pressing in step (b) can be greatly reduced, thus enhancing the advantages of the present invention. Some other method such as electrolytic working, laser beam working or the like can be used instead of photo-etching.

Furthermore, reinforcing portions can be formed in the insides (inner circumferential sides) of the cutting edges of the cutter blades in order to prevent chipping of these cutting edges during the pressing performed in step (b). More specifically, reinforcing portions can be worked at the same time as the protruding portions by using a mold that has a shape to form the reinforcing portions in addition to a shape that form the protruding portions. The reinforcing portions can be formed by a mold in which a slight amount of working for the shape for the reinforcing portions is made therein.

Embodiments of the present invention will now be described by way of example only, with reference to the accompanying drawings, in which:-
Figure 1 is a schematic front view of a reciprocating electric shaver for which the inner cutter of the present invention is adapted to be used;
Figure 2 is a schematic side view thereof;
Figures 3A through 3E shows process of manufacturing method for the inner cutter according to the present invention
Figure 4 shows the steps of the manufacturing process of the inner cutter of the present invention;
Figure 5 shows in cross section the side view of the inner cutter of the present invention;
Figure 6 is an enlarged cross-sectional view taken along the line VI-VI in Figure 5;
Figure 7 is an enlarged perspective view of a part of a cutter blade of the inner cutter of the present invention seen from the inside;
Figure 8 is a top view of the inner cutter according to one embodiment of the present invention unfolded;
Figure 9 is a top view of the inner cutter of another embodiment of the present invention unfolded;
Figure 10 is a top view of the inner cutter of still another embodiment of the present invention unfolded;
Figure 11 is a top view of the inner cutter of still another embodiment of the present invention unfolded;
Figure 12A is a top view of the inner cutter of further embodiment of the present invention unfolded, and Figure 12B and 12C are enlarged views, respectively, of the cutter blades;
Figure 13A is a top view of the inner cutter of still further embodiment of the present invention unfolded, and Figure 13B is an enlarged view of the cutter blades thereof;
Figures 14A through 14D show the manufacturing process of an inner cutter by a conventional press-molding method;
Figure 15 shows in detail the manufacturing steps (A) through (D) of the cutter blades thereof;
Figures 16A and 16B show the manufacturing steps of an inner cutter in a conventional etching method;
Figure 17 shows the manner of manufacturing an inner cutter in a conventional grinding/cutting method; and
Figure 18A shows the manner of manufacturing an inner cutter in a conventional electro-casting, and Figure 18B illustrates the completed inner cutter.

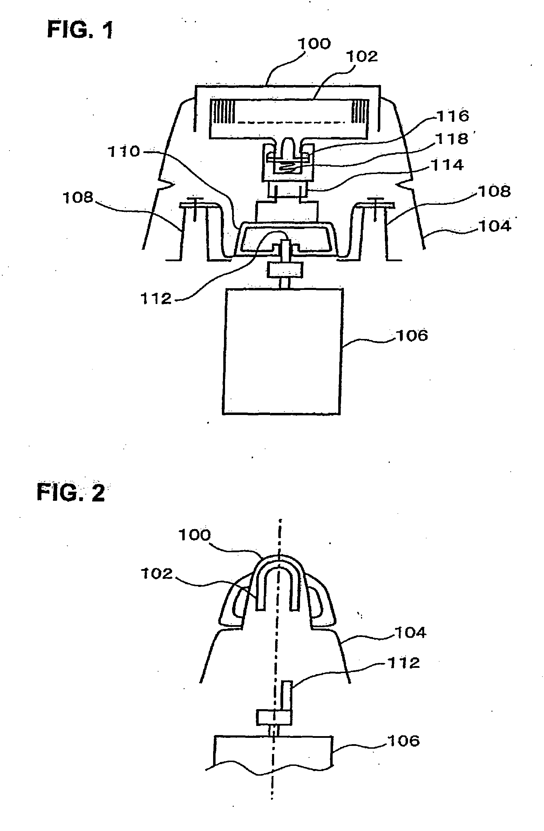

Figure 1 shows schematically the internal structure of a reciprocating type electric shaver according to one embodiment of the present invention, the internal structure of the shaver being omitted; and Figure 2 shows the shaver from the side.

In Figures 1 and 2, the reference number 100 is an arch-shaped outer cutter, and 102 is an arch-shaped inner cutter that makes a reciprocating motion within or under the outer cutter 100. The outer cutter 100 is fastened to a frame 104 of the shaver body (not shown). The outer cutter 100 is made of a thin plate of stainless steel, etc., and a plurality of openings (hair introduction openings) are formed in this thin metal plate by, for instance, press-stamping or etching. The outer cuter 100 can be made by electro-casting.

The inner cutter 102 is driven in a reciprocating motion by an electric motor 106. More specifically, a plane oscillator 110 made of a synthetic resin is suspended from the upper end surfaces of a pair of supporting columns 108 that extend in an upright attitude from the frame 104 of the shaver so that the oscillator 110 is free to oscillate laterally (or to the left and right), and a crank pin 112 that is fastened to the rotating shaft of the motor 106 is engaged with a long groove formed in the oscillator 110. As a result, when the rotating shaft of the motor 106 installed in the shaver body rotates, the oscillator 110 makes a lateral (or left and right) reciprocating motion.

A supporting column 114 is provided so as to protrude from this oscillator 110, and a holding portion 116 for the inner cutter 102 is held on the supporting column 114. The holding portion 116 is guided by the supporting column 114 so that the holding portion 116 is free to make an upward and downward motion; and a return inertia oriented in the upward direction toward the outer cutter 100 is applied to the holding portion 116 by a coil spring 118. As a result, the inner cutter 102 is driven in a reciprocating motion by the motor 106 while being held in elastic contact with the inside surface of the outer cutter 100 by the coil spring 118.

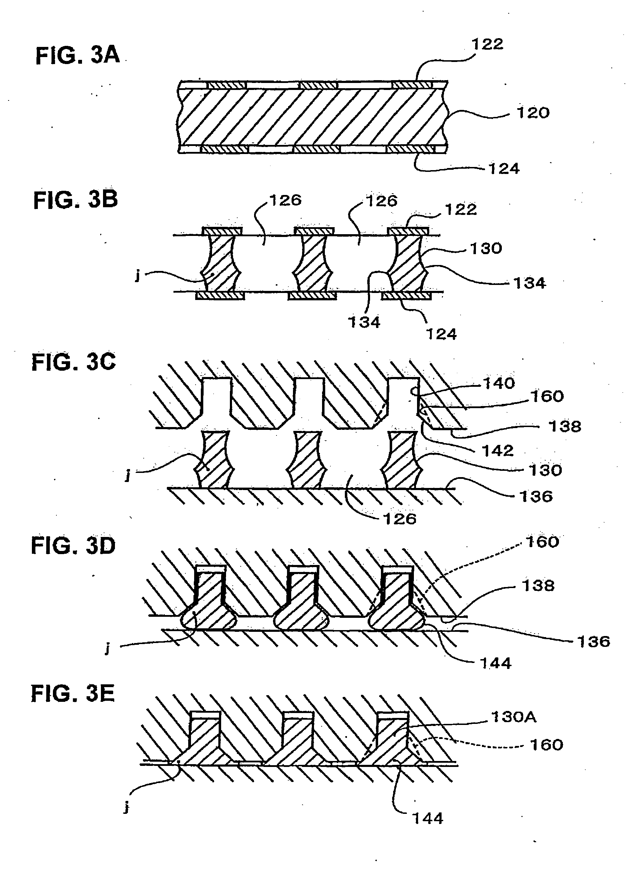

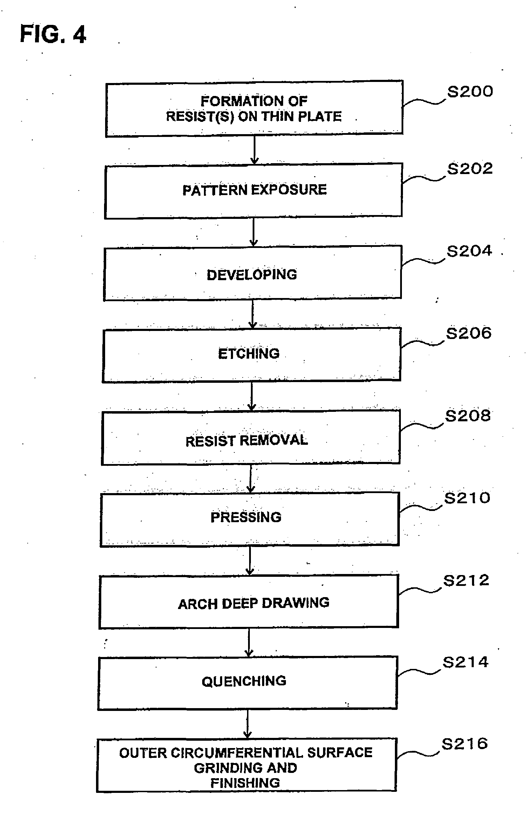

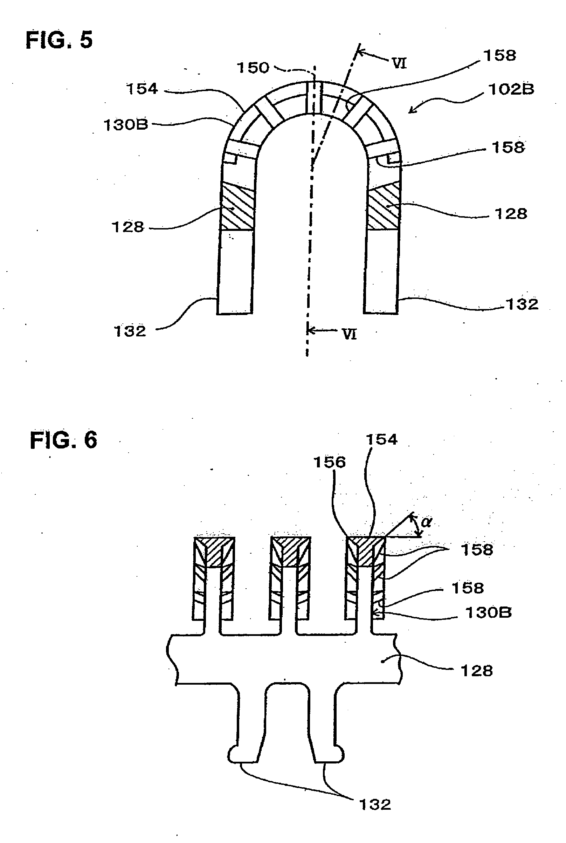

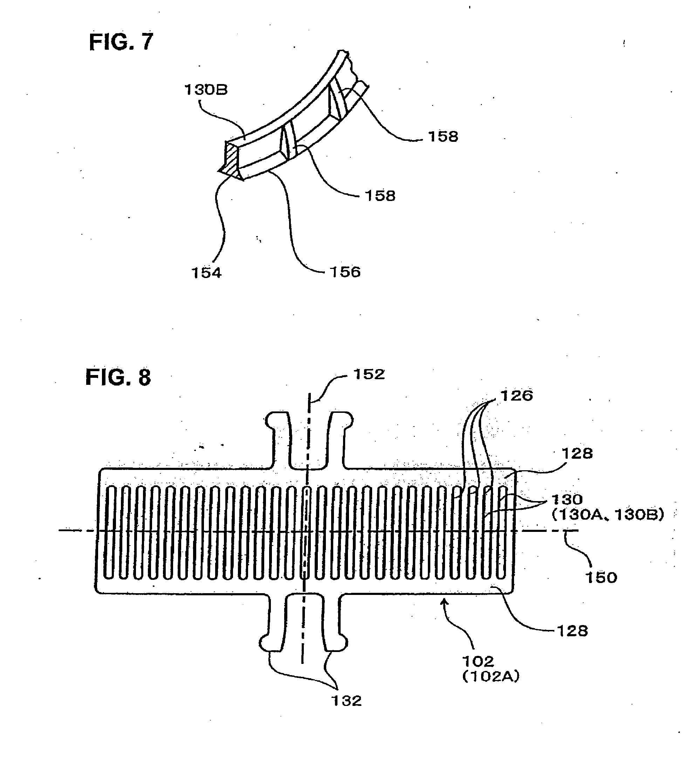

Figures 3A through 3E show the working process of the inner cutter 102, Figure 4 shows the manufacturing process of the inner cutter 102, Figure 5 is a sectional side view of the inner cutter 102, Figure 6 is a sectional view of the inner cutter, Figure 7 is an enlarged perspective view of a part of the cutter blades seen from the inside, and Figure 8 is a top view of the inner cutter unfolded or before being turned into an arch-shape.

In Figures 3A, the reference numeral 120 indicates a thin plate made of stainless steel or the like.

Patterns (as shown in Figure 8, for instance) of the inner cutter 102 are formed by photo-resists 122 and 124 on both sides (on both surfaces) of this thin plate. The resists 122 and 124 are formed by applying a coating of a resist liquid or pasting a dry film (see step S200 in Figure 4), exposing the pattern of the inner cutter 102 (step S202), and developing the exposed pattern (step S204). The resists in the portions corresponding to the slits 126 are removed. Here, the resists 122 and 124 cover the portions that will become both side edges 128 (see Figure 8), the bridging-portions 130 and the claws 132.

The thin plate 120 on which the resists 122 and 124 are formed is etched from both sides (surfaces) as show in Figure 3B. More specifically, etching is performed by applying a jet of etching liquid to both sides (or both surfaces) simultaneously or one at a time, so that the slits (grooves) 126 are formed. Since the etching liquid etches only places where there is no resist 122 or 124, the slits 126 are formed between the resists (step S206).

Etching proceeds in the direction of thickness of the thin plate 120 from the gaps between the resists 122 and from the gaps between the resists 124; accordingly, the worked wall surfaces that define the slits 126 are uneven or inclined with respect to the direction of depth as shown in Figure 3B, taking substantially an arc shape in cross section to have curved surfaces. Since etching is performed on both sides of the thin plate, slits are defined by uneven or arc shaped wall surfaces on their both sides with the wall surfaces having protruding strips 134. Since these protruding strips 134 later make the protruding portions 144 when the pressing working is executed, it is desirable that these protruding strips 134 be formed in positions close to the protruding portions 144. For this purposes, the amount of etching liquid that is applied is set at a larger amount on the front upper side (or upper side in Figure 3B) of the thin plate, and at a smaller amount on the back (or lower) side. It is also possible that the width of the resist 122 on the front side be set at a width that is narrower than the width of the resist 124 on the back side.

When etching is completed, the resists 122 and 124 on the front surface and back surface are removed (step S208).

Next, pressing is performed (step S210). This pressing work uses a lower mold 136 and an upper mold 138 as shown in Figure 3C. These molds 136 and 138 have substantially the same cross-sectional shapes as the molds 22 and 24 shown in the above-described Figure 15. In other words, the lower mold 136 is flat, and the upper mold 138 has grooves 140 and beveled faces 142.

The grooves 140 of the upper mold are aligned with the bridging-portions 130, and then the upper mold 138 is lowered and pressed toward the lower mold 136; as a result, the bridging-portions 130 are deformed as shown in Figure 3D. More specifically, the lower portions of the bridging-portions 130 protrude along the beveled faces 142 of the upper mold 138, and these protruding portions 144 are squeezed in the gaps between the upper and lower molds 138 and 136, so that ribs 130A that have a cross-sectional shape that is substantially the shape of an inverted umbrella or an inverted T are formed as shown in Figure 3E. The blade surface sides (the bottom side in Figure 3E) of these protruding portions 144 protrude sufficiently further in the direction of the blade surfaces than the blade surfaces that are after the finishing-work, so that grinding can be performed sufficiently when the outer circumferential surface is ground in a subsequent process (step S216).

In this embodiment, the position **j** of the dot symbol in the vicinity of the protruding strip 134 shown in Figure 3B is caused to move into the protruding portions 144 by the pressing work; however, the amount of this movement is extremely small. In other words, the amount of plastic deformation is small. Accordingly, braking and cracking do not tend to occur internally.

The thus pressed ribs 130A are formed as a result that the bridging-portions 130 which are connected at both ends to the side edge portions 128 (see Figure 8) are worked. A plate-form intermediate worked member 102A that has thus been worked and obtained is deep drawn into an arch-form shape (step S212). More specifically, deep drawing is performed as shown in Figure 5 about a centerline 150 that passes through the center in the direction of width (see Figure 8,) and is parallel to the reciprocating direction of the inner cutter 102. Figure 5 is a sectional view taken along the line 152 in Figure 8 after arch-form shaping.

The outer circumferential surface of the intermediate worked member 102B that has thus been deep drawn into an arch-form shape as shown in Figure 5 is ground and finished (step S216) after being quenched (step S214). As a result, the ribs 130A formed after the pressing work of the bridging-portions 130 make cutter blades 130B, as seen in Figure 6, that has blade surfaces 154 on the outer circumferential surfaces. Both edges of the blade surfaces 154 of these cutter blades 130B protrude in the form of eaves, and the tip ends of these eaves form cutting edges 156. The rake angle α of the cutting edges 156 is an acute angle.

In the above process, when the flat plate form intermediate worked member 102A (Figure 8) is deep drawn and worked into an arch-shaped intermediate worked member 102B shown in Figure 5 (step S212), side edges of the protruding portions 144 are pulled toward the inner circumferential side; accordingly, the outer circumferential surfaces of the protruding portions 144 inevitably bend in a plane perpendicular to the direction of length of the ribs 130A. In the present invention, however, the amount of protrusion of the protruding portions 144 toward the blade surface is sufficiently ensured; accordingly, the outer circumferential surfaces are ground to make surfaces parallel to the reciprocating direction of the inner cutter in the subsequent grinding process (step S216).

In the above embodiment, in order to prevent chipping of the eave-form cutting edges 156, reinforcing portions 158 are formed so as to support the eaves from the inside (see Figures 5, 6 and 7). The reinforcing portions 158 can be formed by using a mold in which a plurality of sub-grooves 160 (see Figures 3C, 3D and 3E) for forming these reinforcing portions 158 are formed at an appropriate spacing (in five locations in Figure 5) for each cutter blade 130B in each one of the grooves 140 of the upper mold 138 (Figure 3) that is used for the pressing work (step S210 in Figure 4). With the thus formed reinforcing portions 158, it is possible to make the rake angle α of the cutting edges 156 further acute angle, so that the inner cutter has improved sharpness.

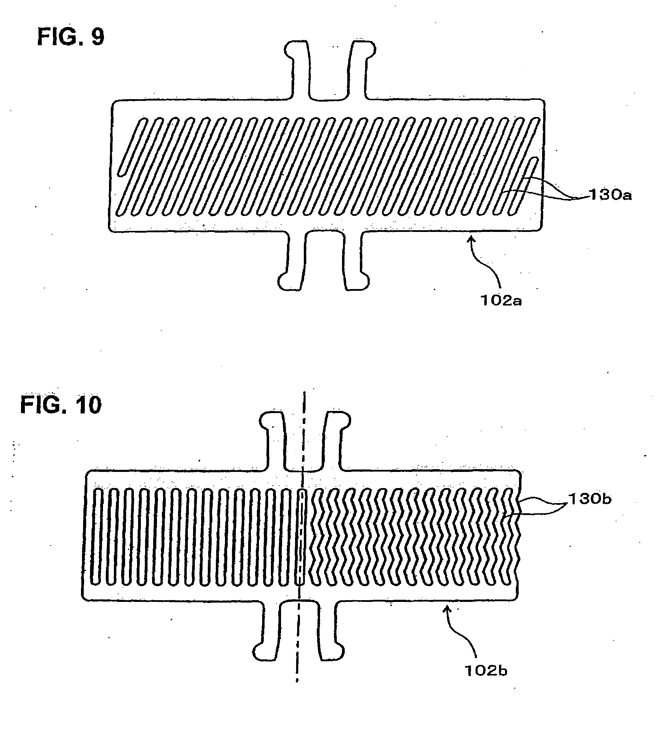

In the above-described embodiment, as is clear from Figure 8, the cutter blades 130B (bridging-portions 130, ribs 130A) have a rectilinear shape that is perpendicular to the reciprocating (or lateral) direction (in the direction of extension of the center line 150) of the inner cutter 102. However, the cutter blades 130B are not limited to such a shape, and various configurations are possible. Figures 9 through 13 show the cutter blades of various configurations. In Figures 9 through 13, the inner cutters are shown unfolded as in the same manner as in Figure 8.

In the inner cutter 102a shown in Figure 9, the cutter blades 130a are inclined at a fixed angle with respect to the reciprocating (lateral) direction of the inner cutter 102a. In this embodiment, the cutter blades 130a cut the hair obliquely, and the cutter blades 130a have improved sharpness.

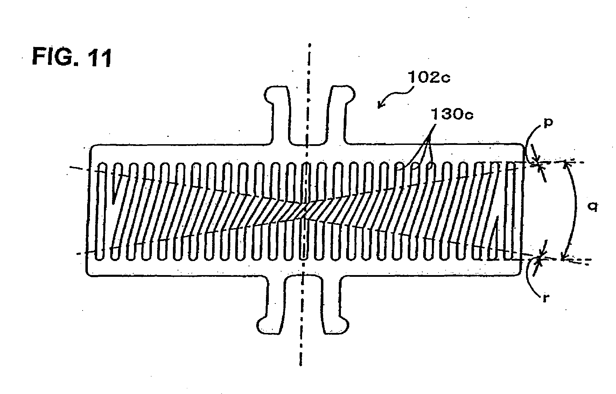

In the inner cutter 102b shown in Figure 10, some of the cutter blades 130b (those in the right half of Figure 10) have a wave-shape. In this embodiment, the length of the wave-shape cutter blades 130b can be smaller than the length of the cutter blades 130a in Figure 9. The wave-shape cutter blades 130b have an increased strength compared to the strength of the cutter blades in Figure 9.

The inner cutter 102c shown in Figure 11 has a plurality of bent regions (three bent regions) p, q and r that are different in inclinations with respect to the reciprocating (lateral) direction of the inner cutter 102c. In the central bent region q, the cutter blades are inclined and the inclination of adjacent cutter blades 130c varies slightly next to each other; and in the other regions **p** and **r** at both ends, the cutter blades are perpendicular to the reciprocating (lateral) direction of the inner cutter. Accordingly, when adjacent cutter blades 130c within the region **q** cut across the same hair introduction opening of an outer cutter, these cutter blades contact the same hair at different angles, so that the positions of the opening edges of the outer cutter contacted by the hair are varied. As a result, it is possible to extend the useful life of the outer cutter and to improve the sharpness.

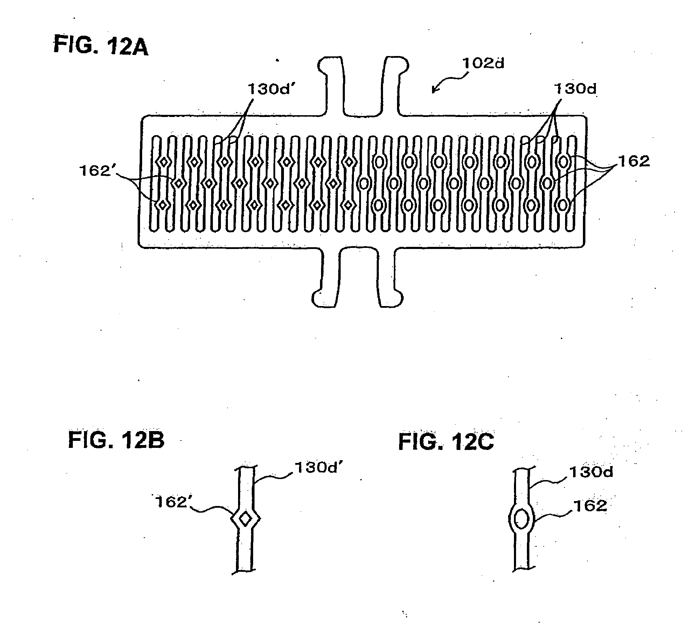

In the inner cutter 102d shown in Figure 12A, deformed portions 162 that have different width in the reciprocating (lateral) direction are formed in the cutter blades 130d, and positions of these deformed portions 162 are varied in the direction of length of adjacent cutter blades 130d (i.e., in the direction perpendicular to the reciprocating (lateral) direction). Figure 12A shows the inner cutter 102d unfolded, and Figures 12B and 12C show the deformed portions 162 in enlarged view. The deformed portions 162 of the cutter blades 130d in the right half of Figure 12A have a substantially oval ring shape as shown in Figure 12B, while the deformed portions 162' of the cutter blades 130d' in the left half of Figure 12A have a substantially diamond ring shape as shown in Figure 12C. In this inner cutter 102d, the shapes of the cutter blades 130d and 130d' are different in the right half and left half; however, this is mere an example of two different shapes that can be taken as the shape of the deformed portions in the cutter blades.

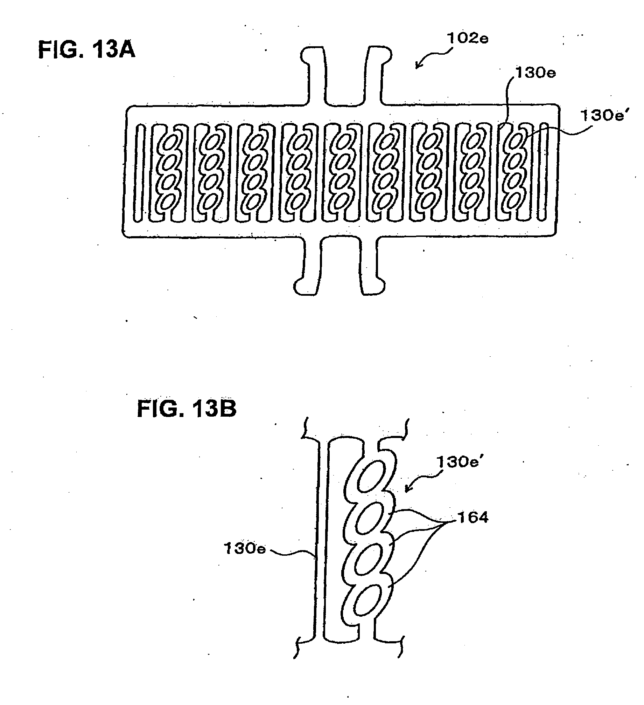

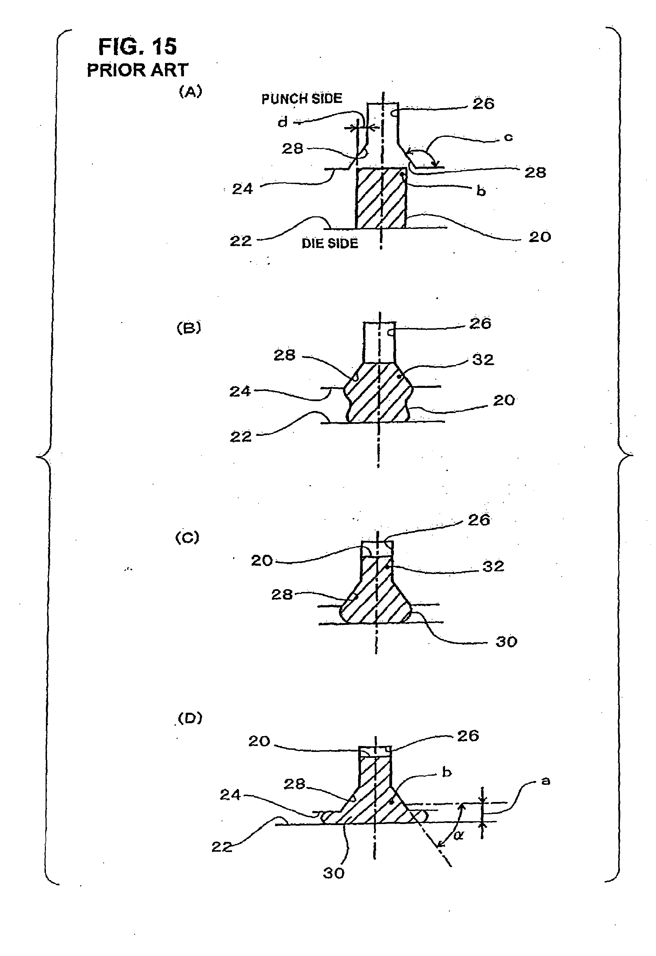

Figure 13A shows the unfolded inner cutter 102e of still another embodiment of the present invention, and Figure 13B is an enlarged view of a part of the cutter blades 130e and 130e' of this inner cutter 102e. In this embodiment, among the adjacent cutter blades 130e and 130e', the cutter blades 130e are in a rectilinear shape that is perpendicular to the reciprocating (lateral) direction of the inner cutter 102e, while the other cutter blades 130e' are formed with deformed portions 164 in an oval ring shape.

In the inner cutters shown in Figures 12A and 13A, when adjacent cutter blades 130d and 130d' or 130e and 130e' cut across the same hair introduction opening of the outer cutter, the inclination angle (intersection angle) is different. Accordingly, the outer cutter has extended useful life and improved sharpness.

In the present invention, cutter blades that have complicated shapes such as those shown in Figures 10 through 13B can be formed.

## Claims

1. A method for manufacturing an inner cutter adapted to be used in a reciprocating electric shaver which causes an integral inner cutter to make a reciprocating motion while causing a plurality of cutter blades formed in said inner cutter to make sliding contact with an inside surface of an arch-form outer cutter, said method comprising the steps of:
(a) forming a plurality of slits in a thin plate so that said slits are substantially perpendicular to a reciprocating direction of said inner cutter and are defined by uneven surfaces with respect to a depth of said slits,
(b) forming ribs by pressing bridging-portions located between said slits so that said ribs extend in a direction of length of said bridging-portions and are in a form of protruding portions that protrude in a direction of width and toward a blade surface, thus obtaining an intermediate worked member,
(c) deep drawing said intermediate worked member that has ribs formed in step (b) into substantially an arch shape with said protruding portions of said ribs facing outward, and
(d) grinding an outer surface of said arch-form intermediate worked member, thus forming cutting edges which have blade surfaces and acute rake angles in said protruding portions.

2. The method for manufacturing an inner cutter adapted to be used in an electric shaver according to Claim 1, wherein in said step (a) said thin plate is formed so as to have a contour for an inner cutter.

3. The method for manufacturing an inner cutter adapted to be used in an electric shaver according to Claim 1, wherein in said step (b), a contour of said inner cutter is obtained at the same time as said pressing work of said ribs on said thin plate.

4. The method for manufacturing an inner cutter adapted to be used in an electric shaver according to Claim 1, wherein in said step (a) a plurality of slits are formed by photo-etching.

5. The method for manufacturing an inner cutter adapted to be used in an electric shaver according to Claim 4, wherein in said step (a) etching is performed from both sides of said thin plate.

6. The method for manufacturing an inner cutter adapted to be used in an electric shaver according to Claim 4, wherein in said step (a) etching is performed from one side of said thin plate.

7. The method for manufacturing an inner cutter adapted to be used in an electric shaver according to any one of Claims 1 through 6, wherein in said step (b), reinforcing portions are formed in said cutter blade in the same step as said formation of said protruding portions, said reinforcing portions being to support eave-shaped cutting edges formed in said cutter blades from an inner side of said arch-from.
